## Europäisches Patentamt
## European Patent Office
## Office européen des brevets

(11) Veröffentlichungsnummer: **0 350 720**
**A2**

(12) # EUROPÄISCHE PATENTANMELDUNG

(21) Anmeldenummer: **89111813.5**

(22) Anmeldetag: **29.06.89**

(51) Int. Cl.⁴: **H04B 10/20 , G02B 6/42**

(30) Priorität: **15.07.88 DE 3823974**

(43) Veröffentlichungstag der Anmeldung:
**17.01.90 Patentblatt 90/03**

(84) Benannte Vertragsstaaten:
**AT BE CH DE ES FR GB GR IT LI LU NL SE**

(71) Anmelder: **ECKARD DESIGN GMBH**
**Reesbergstrasse 1**
**D-6400 Fulda(DE)**

(72) Erfinder: **Thiesen, Jürgen**
**Strickweg 11**
**D-6402 Grossenlüder 2(DE)**

(74) Vertreter: **Schlagwein, Udo, Dipl.-Ing.**
**Anwaltsbüro Ruppert & Schlagwein**
**Frankfurter Strasse 34**
**D-6350 Bad Nauheim(DE)**

(54) **Zur Datenübertragung ausgebildeter Lichtwellenleiter sowie Datenbus-System für ein Kraftfahrzeug.**

(57) Bei einem Lichtwellenleiter (1) ist eine Koppelfläche (4) derart ausgebildet, daß nur aus einer Richtung kommendes Licht ausgekoppelt und Licht nur in eine Richtung eingekoppelt werden kann. Dadurch sind die Leistungsverluste sehr gering. In einem Kraftfahrzeug werden verschiedene elektrische oder elektronische Baugruppen mit solchen gerichteten Kopplern an einen als Ringleitung ausgebildeten und an die beiden Schnittstellen eines Kopfrechners angeschlossenen Lichtwellenleiter angekoppelt.

Fig. 1

EP 0 350 720 A2

## Zur Datenübertragung ausgebildeter Lichtwellenleiter sowie Datenbus-System für ein Kraftfahrzeug

Die Erfindung betrifft einen zur Datenübertragung ausgebildeten Lichtwellenleiter mit einem Koppler zum Einkoppeln oder Auskoppeln von Licht. Weiterhin betrifft die Erfindung ein Datenbus-System für ein Kraftfahrzeug.

Lichtwellenleiter gewinnen in der Nachrichtentechnik aus vielerlei Gründen zunehmend an Bedeutung. Sie haben eine hohe Übertragungskapazität und werden nicht durch elektromagnetische Störfelder von außen beeinflußt. Weiterhin sind sie sehr kostengünstig herstellbar, weil sie aus billigen und in großen Mengen vorhandenen Materialien (Glas und Kunststoff) bestehen. Für viele Anwendungsfälle ist es bei Lichtwellenleitern jedoch von Nachteil, daß die zum Aufteilen bzw. Verteilen des Nachrichtenflusses erforderlichen, optischen Koppler zu einem kräftigen Leistungsabfall führen. Dadurch werden bei einem Übertragungssystem mit zahlreichen daran angeschlossenen Baugruppen den nachgeordneten Baugruppen oftmals nur sehr schwache Signale übermittelt.

Für Kraftfahrzeuge sind bereits Datenbus-Systeme bekanntgeworden, bei denen zur Datenübertragung jeweils zwei Signalleitungen aus elektrisch leitendem Material vorgesehen sind. In der zweiten Signalleitung wird jeweils gleichzeitig mit einem Signal in der ersten Signalleitung ein invertiertes Signal gesendet. Diese doppelte Signalführung dient als Störschutz vor eingekoppelten Störungen, da zur Auswertung das Differenzsignal herangezogen wird. Das bekannte Datenbus-System ist kompliziert aufgebaut und schließt dennoch Störungen nicht zuverläs sig aus. Hierbei ist zu bedenken, daß ein Kraftfahrzeug sehr unterschiedlichen und oftmals starken elektromagnetischen Störfeldern ausgesetzt ist, beispielsweise durch den elektrischen Anlasser oder beim Unterfahren von Hochspannungsleitungen. In der Praxis konnten sich deshalb Datenbus-Systeme in Kraftfahrzeugen noch nicht durchsetzen.

Der Erfindung liegt die Aufgabe zugrunde, einen zur Datenübertragung ausgebildeten Lichtleiter derart zu gestalten, daß mit möglichst geringem Verlust Signale ein-oder ausgekoppelt werden können. Weiterhin soll ein Datenbus-System für ein Kraftfahrzeug geschaffen werden, welches kostengünstig herstellbar und unempfindlich gegenüber externen Störfeldern ist.

Die erstgenannte Aufgabe wird erfindungsgemäß dadurch gelöst, daß der Koppler eine gegenüber einer quer zur Haupterstreckungsrichtung des Lichtwellenleiters verlaufenden Geraden geringfügig geneigte Koppelfläche hat.

Durch diese Ausrichtung der Koppelfläche wird es möglich, aus einer Richtung kommendes Licht mit geringem Verlust aus dem Lichtwellenleiter auszukoppeln und einem Empfänger zuzuführen. Ebenso ist es möglich, von einem Sender Licht mit geringem Verlust in eine Richtung des Lichtwellenleiters einzukoppeln. Dadurch können an einem Lichtwellenleiter viele Baugruppen angeschlossen werden, ohne daß ein unzulässig großer Leistungsabfall eintritt. Weiterhin braucht die Lichtquelle im Sender keine unerwünscht große Leistung aufzuweisen.

Besonders kostengünstig sind die Koppelflächen zu erzeugen, wenn sie durch eine steile Flanke einer mit einer flachen Flanke und steilen Flanke in den Lichtwellenleiter hineinführenden Kerbe gebildet ist. Die eine Koppelfläche bildenden Kerben können beispielsweise in aus Kunststoff bestehenden Lichtwellenleitern durch Eindrücken an der jeweils gewünschten Stelle erzeugt werden.

Bei Lichtwellenleitern aus Kunststoff ist es alternativ möglich, daß die Koppelfläche an einem Ansatz des Lichtwellenleiters vorgesehen ist und dieser Ansatz eine flach zur Längsrichtung des Lichtwellenleiters ansteigende Begrenzungsfläche und eine die Koppelfläche bildende, steil zur Längsrichtung des Lichtwellenleiters abfallende Begrenzugsfläche aufweist.

Die zweitgenannte Aufgabe, nämlich die Schaffung eines Datenbus-Systems zur seriellen Datenübertragung zwischen einem Rechner und elektronischen Baugruppen eines Kraftfahrzeugs, wird erfindungsgemäß dadurch gelöst, daß als Übertragungsleitung ein Lichtwellenleiter dient und die Baugruppen jeweils über eine zum Rechner hin gerichtete Koppelfläche mit dem Lichtwellenleiter gekoppelt sind. Ein solches Datenbus-System ist sehr einfach und übersichtlich aufgebaut, da es nur einen Lichtwellenleiter benötigt. Die Ankopplung der Baugruppen ist sehr einfach und damit kostengünstig und führt nur zu geringen Verlusten, da keine Y- oder Sternverteilung benötigt wird. Selbstverständlich ist es auch möglich, statt eines Rechners mehrere Kopfrechner vorzusehen. Bei den elektronischen Baugruppen handelt es sich um untergeordnete Rechner mit Leistungselektronik.

Mit besonders geringem Aufwand und besonders zuverlässig lassen sich in einem Kraftfahrzeug elektrische und elektronische Baugruppen ansteuern, wenn die Übertragungsleitung eine mit ihren beiden Enden an dem Rechner angeschlossene Ringleitung ist und die Baugruppen jeweils über den jeweils kürzeren Leitungsbereich zum Rechner hin gerichtet an der Übertragungsleitung angekoppelt sind. Eine solche ringförmige Übertragungsleitung ist auch sehr einfach zu überprüfen.

Die Erfindung läßt zahlreiche Ausführungsformen zu. Zur weiteren Verdeutlichung ihres Grundprinzips sind zwei Ausführungsformen eines Lichtwellenleiters und ein Datenbus-System in der Zeichnung dargestellt und werden nachfolgend beschrieben. Die Zeichnung zeigt in

Fig. 1 eine schematische Seitenansicht eines Teilbereiches eines Lichtwellenleiters mit einem Koppler,

Fig. 2 eine der Figur 1 entsprechende Darstellung einer zweiten Ausführungsform eines Lichtwellenleiters mit einem Koppler,

Fig. 3 ein Blockschaltbild eines erfindungsgemäßen Datenbus-Systems.

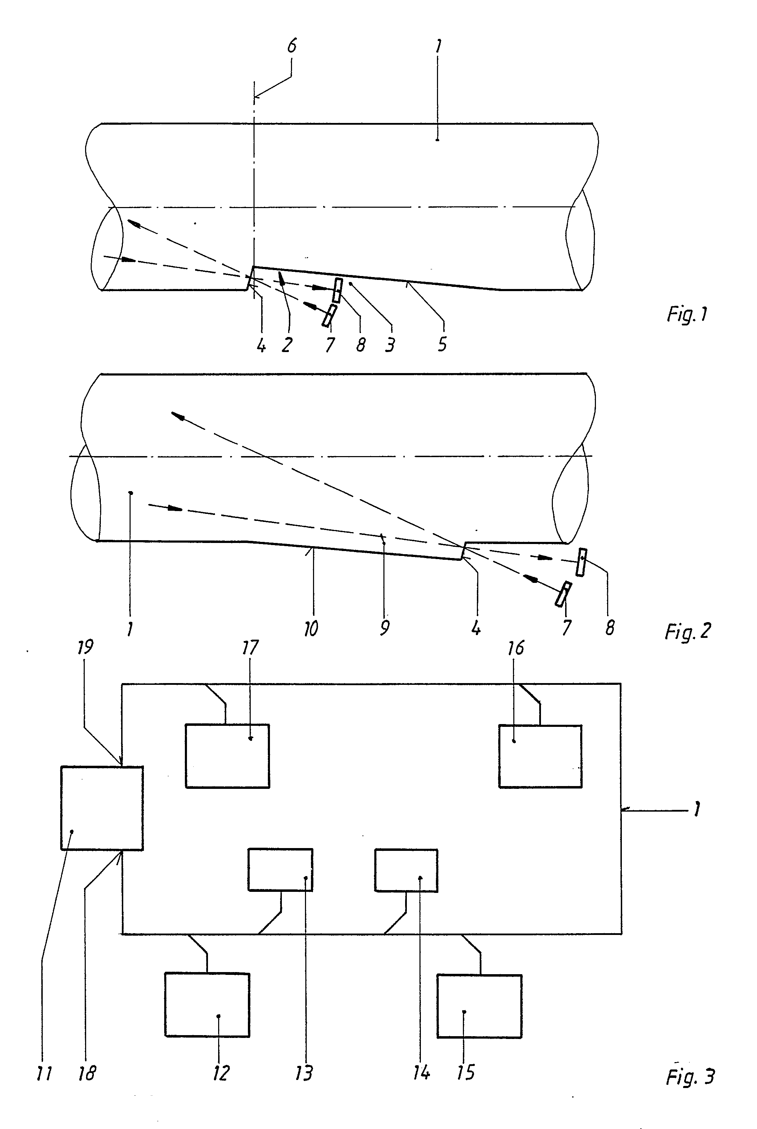

Die Figur 1 zeigt einen Teilbereich eines Lichtwellenleiters 1 mit einem Koppler 2. Dieser ist durch eine Kerbe 3 gebildet, die mit einer eine Koppelfläche 4 bildenden, steilen Flanke in den Lichtwellenleiter 1 hinein und mit einer flachen Flanke 5 aus ihm hinausführt. Die Koppelfläche 4 ist gegenüber einer quer zur Längserstreckung des Lichtleiters 1 verlaufenden Geraden 6 geringfügig geneigt, so daß von einem Sender 7 gegen die Koppelfläche 4 gerichtetes Licht in der Zeichnung gesehen nach links in den Lichtleiter strahlt. Ebenso vermag von der linken Seite des Lichtleiters kommende Licht an der Koppelfläche 4 auszutreten und zu einem Empfänger 8 zu gelangen. Verluste des eingekoppelten Lichtes können durch eine Verspiegelung der Außenseite des Lichtleiters an der dem Koppler 2 gegenüberliegenden Seite vermieden werden. Es ist auch möglich, daß ein und dasselbe Bauteil sowohl als Sender als auch als Empfänger dient.

Bei der Ausführungsform gemäß Figur 2 ist die Koppelfläche 4 an einem am Lichtwellenleiter 1 angeformten Ansatz 9 vorgesehen, der mit einer flach ansteigenden Begrenzungsfläche 10 aus der Kontur des Lichtwellenleiters 1 herausführt und bei dem die Koppelfläche 4 durch eine steil zurück zur Kontur des Lichtwellenleiters führende Begrenzungsfläche gebildet ist. Von der Funktion her entspricht die Ausführungsform nach Figur 2 identisch der nach Figur 1.

Die Figur 2 zeigt ein Datenbus-System, bei dem der Lichtwellenleiter 1 als Ringleitung ausgebildet und an die beiden seriellen Schnittstellen 18, 19 eines Rechners 11 angeschlossen ist. Am Lichtwellenleiter 1 sind verschiedene elektrische oder elektronische Baugruppen des Kraftfahrzeuges angeschlossen. Bei einer mit 12 positionierten Baugruppe soll es sich beispielsweise um das linke, vordere Licht und bei der mit 15 bezeichneten Baugruppe um das linke, hintere Licht handeln. 13 und 14 können Motor- oder Innenausstattungsbaugruppen sein, während es sich bei 16 und 17 um das vordere rechte und hintere linke Licht handeln kann. Wie die Figur 3 erkennen läßt, sind alle Baugruppen 12 - 17 gerichtet am Lichtwellenleiter gekoppelt. Dadurch kann ein über die Schnittstelle 18 abgegebenes Signal nur von den Baugruppen 12 -15 und ein über die Schnittstelle 19 abgegebenes Signal nur von den Baugruppen 16, 17 empfangen werden.

## Ansprüche

1. Zur Datenübertragung ausgebildeter Lichtwellenleiter mit einem Koppler zum Einkoppeln oder Auskoppeln von Licht, dadurch gekennzeichnet, daß der Koppler (2) eine gegenüber einer quer zur Haupterstreckungsrichtung des Lichtwellenleiters (1) verlaufenden Geraden (6) geringfügig geneigte Koppelfläche (4) hat.

2. Lichtwellenleiter nach Anspruch 1, dadurch gekennzeichnet, daß die Koppelfläche (4) durch eine steile Flanke einer mit einer flachen Flanke (5) und steilen Flanke in den Lichtwellenleiter (1) hineinführenden Kerbe (3) gebildet ist.

3. Lichtwellenleiter nach Anspruch 1, dadurch gekennzeichnet, daß die Koppelfläche (4) an einem Ansatz (9) des Lichtwellenleiters (1) vorgesehen ist und dieser Ansatz (9) eine flach zur Längsrichtung des Lichtwellenleiters (1) ansteigende Begrenzungsfläche (10) und eine die Koppelfläche (4) bildende, steil zur Längsrichtung des Lichtwellenleiters (1) abfallende Begrenzugsfläche aufweist.

4. Datenbus-System zur seriellen Datenübertragung zwischen einem Rechner und elektronischen Baugruppen eines Kraftfahrzeugs, dadurch gekennzeichnet, daß als Übertragungsleitung ein Lichtwellenleiter (1) dient und die Baugruppen (12 - 17) jeweils über eine zum Rechner (11) hin gerichtete Koppelfläche (4) mit dem Lichtwellenleiter (1) gekoppelt sind.

5. Datenbus-System nach Anspruch 4, dadurch gekennzeichnet, daß die Übertragungsleitung eine mit ihren beiden Enden an dem Rechner (11) angeschlossene Ringleitung ist und die Baugruppen (12 - 17) jeweils über den jeweils kürzeren Leitungsbereich zum Rechner (11) hin gerichtet an der Übertragungsleitung angekoppelt sind.

EP 0 350 720 A2

Fig. 1

Fig. 2

Fig. 3